Europäisches Patentamt

European Patent Office

Office européen des brevets

(11) Publication number: 0 341 068
A1

# EUROPEAN PATENT APPLICATION

(21) Application number: 89304516.1

(22) Date of filing: 04.05.89

(51) Int. Cl.⁴: B 32 B 25/08
B 32 B 27/34

(30) Priority: 05.05.88 GB 8810610

(43) Date of publication of application:
08.11.89 Bulletin 89/45

(84) Designated Contracting States:
BE DE ES FR GB IT SE

(71) Applicant: EXXON CHEMICAL PATENTS INC.
200 Park Avenue
Florham Park New Jersey 07932 (US)

(72) Inventor: Jourdain, Paul Eric
Avenue Octave Michot 18A
B-1640 Rhode St. Genese (BE)

Ohlsson, Stefan Bertil
Bld Bischoffsheim 39, B-13
B-1000 Brussels (BE)

(74) Representative: Dew, Melvyn John et al
Exxon Chemical Limited Exxon Chemical Technology
Centre P.O. Box 1
Abingdon Oxfordshire, OX13 6BB (GB)

(54) Coated rubber.

(57) A multilayer composition comprising a rubber substrate to which is adhered eg by lamination, a layer comprising an adhesion layer adjacent to the substrate and a low friction layer remote from the substrate. The adhesion layer comprises a polyolefin eg polypropylene, to which has been grafted an ethylenically unsaturated carboxylic acid or a derivative thereof eg maleic anhydride, and the low friction layer comprises a polyamide, eg nylon.

EP 0 341 068 A1

Bundesdruckerei Berlin

# Description

## COATED RUBBER

This invention relates to the application of a multilayer to a rubber substrate.

Vulcanised ethylene-propylene terpolymer rubbers (EPDM) are well suited for many automotive and building applications due to the outstanding ozone and weathering resistance of EPDM polymers. This feature is due to the completely saturated hydrocarbon backbone of EPDM. However, as with most elastomers the coefficient of friction is very high and EPDM and other elastomers are not suitable for providing sliding surfaces, for example as sealing strips for sliding glass windows in motor cars. Also currently the surface of EPDM and certain other elastomers is covered with flock applied through an electrostatic field and adhered onto the elastomer with polyurethane adhesive.

JP 61-104842 (Honda Motor Ind. K.K.) teaches an ethylene-propylene rubber which has a nylon resin laminated on it using an adhesive which is a mixture of eg chlorinated polypropylene, maleic anhydride, an epoxy resin and an amine curing agent. The adhesive and nylon layer are applied to the rubber in two separate steps.

JP 61-143137 (Nippon Petrochemical K.K.) employs an ethylene copolymer modified with maleic anhydride as the adhesive layer in a laminate which may include a substrate layer of rubber. However, the other laminar layer is required to be an ultra high molecular weight polyethylene.

JP 60-085945 (Mitsubishi Chem. Ind. K.K.) teaches the preparation of a laminated sheet which may contain layers comprising a polyamide resin, a copolymer of ethylene, a $C_3$ to $C_{12}$ alpha-olefin and a non-conjugated diene or butadiene, and as an adhesive a mixture of high and low density polyethylenes, at least one of which has been grafted with for example maleic anhydride. The adhesive can also contain an ethylene/alpha olefin copolymer rubber. However the ethylene copolymer specified as one of the laminate components (substrate) is not eg EPDM but one which is plastic in nature, and not a rubber which on curing will become elastomeric in nature, with all the advantages that elastomeric properties bring to a polymer.

GB 2 113 696 (ACC Chemical Company) discloses an adhesive blend containing eg a maleinized polyethylene, which blend may be employed in the production of laminates. Many laminates are taught, but none which has nylon adhered to a rubber substrate, although the adhesive is tested for adhesion to a commercial rubber-modified acrylonitrile-methacrylate copolymer film.

US 4 397 916 (Mitsui Petrochemical Industries K.K.) teaches preparation of a laminate by coextrusion of a polyamide and up to 100% of a maleinized polyethylene. Also disclosed are three-layer structures which may include a layer of polypropylene, polyethylene or ethylene/alpha olefin copolymers. However there is no suggestion that a rubber or elastomeric layer should be used, and those layers specifically mentioned all seem to be thermoplastic in nature.

The applicants have discovered a way of modifying the friction properties of EPDM and other elastomers by laminating thereto a special multilayer composition, thereby deriving a product which has the beneficial properties of an elastomeric material combined with the properties conferred by the nature of the other laminar layers.

In accordance with this invention a multilayer composition comprises an uncured or semi-cured rubber substrate to which is adhered a laminated layer comprising an adhesion layer adjacent to the substrate and a low friction layer remote from the substrate. The adhesion layer comprises a polyolefin to which has been grafted an ethylenically unsaturated carboxylic acid or a derivative thereof and the low friction layer comprises a polyamide.

The invention is primarily concerned with a substrate comprising ethylene-propylene-diene monomer (EPDM) rubber, but if desired other rubber substrates may be used. examples of such rubbers are natural rubber (NR) polyisoprene, ethylene-propylene rubber (EPM), butyl or chlorobutyl rubber, neoprene, chloroprene or styrene-butadiene rubber (SBR). The terms EPM and EPDM are used herein in accordance with their ASTM definitions.

SBR is usually made by the copolymerisation of butadiene with styrene (eg 3 parts by weight of butadiene with 1 part by weight of styrene), the monomers being suspended in finely divided emulsion form in a large proportion of aqueous detergent. SBR can however be made by a solution polymerisation process.

EPR is normally prepared by copolymerising the monomers (ethylene and propylene) in the presence of a Ziegler catalyst at relatively low temperatures and pressures.

Butyl rubber comprises a copolymer of major proportion, eg 70-95.5% by weight of a $C_4$-$C_8$ isoolefin such as isobutene, with a minor proportion, eg 0.5 to 30 % by weight of a $C_4$ to $C_{14}$ multiolefin such as butadiene, dimethyl butadiene, piperylene or isoprene. Preferably the butyl rubber contains 85 - 99.5% by weight (especially 95 to 99.5 % by weight) of a $C_4$ to $C_7$ isoolefin, such as isobutene and 0.5 to 15 % by weight (especially 0.5 to 5 % by weight) of conjugated $C_4$ to $C_{10}$ multi-olefin. The textbook "Synthetic Rubber" by G S Whitby (1954 edition by John Wiley & Sons Inc) pp 608 - 609 and "Encyclopaedia of Chemical Technology" 3rd Edition Vol 8 (1979) pp 470 - 484 give a description of butyl rubber. The preparation of butyl-type rubbers is amply described and in general, it consists of the reaction product of a $C_4$ - $C_7$ isoolefin (preferably isobutylene) with a $C_4$ - $C_{10}$ (preferably a $C_4$ - $C_6$ conjugated diolefin, such as isoprene, butadiene, dimethyl butadiene, piperylene, etc. The reaction product of isobutylene and isoprene is preferred. The preparation of butyl rubber is also described in US patent 2,356,128.

In producing halogenated butyl rubber unmodified, unvulcanised butyl rubber is halogenated, eg chlorinated or brominated, so as to provide about one atom of chlorine or bromine in the polymer per molecule of multiolefin present therein. Halogenated butyl rubber usually has a viscosity average molecular weight of between 150,000 and 1,500,000 and a mole per cent unsaturation of between 0.5 and 15%.

The preferred rubber is EPDM and this is usually prepared by contacting a feed stream containing ethylene, propylene and polymerisable diolefin with a Ziegler catalyst in the presence of an inert saturated $C_5$ to $C_8$ hydrocarbon diluent, eg an alkane or cycloalkane such as n-pentane, isopentane, n-hexane, isohexane or n-octane. The copolymerisation is usually carried out at a pressure of 1 to 5 atmospheres. The third monomer is usually a $C_6$ to $C_{16}$ non-conjugated diolefin, eg 1,5-hexadiene, 1,5-octadiene, dicyclopentadiene or a 2-alkyl norbornadiene, such as methylidene norbornene or ethylidene norbornene.

One of the great advantages of this invention is that it is possible to co-vulcanise the rubber substrate with the laminated layer. Accordingly, the rubber forming the substrate should not be in the fully cured state when the laminated layer is brought into contact therewith. EPDM is the particularly preferred rubber which may be in the uncured or semi-cured state. When it is in the semi-cured state, cross-linking has begun and it is no longer "plastics" but is not yet in the elastomeric state.

The adhesion layer comprises a polyolefin grafted with an ethylenically unsaturated carboxylic acid or a derivative of such a carboxylic acid. Preferably the grafted polymer contains up to 20 wt %, more preferably about 15 wt % of ethylene. Such preferred polymers may be a grafted homopolymer having an ethylene-containing copolymer blended therewith or a grafted ethylene-containing copolymer. Such a grafted copolymer may also be blended with (another) ethylene-containing copolymer such as EPR to adjust the ethylene content of the final adhesion layer polymer to the desired value, preferably no more than 50 wt %. With regard to the polyolefin homopolymer or copolymer, the olefin is preferably an alpha olefin and preferred alpha olefins are $C_2$ to $C_{10}$ alpha olefins, for example ethylene, propylene, 1-butene or 1-hexene. The preferred homopolymer is polypropylene and one example is isotactic polypropylene having a density of from 0.86 to 0.91g/cm$^3$ and a molecular weight of from 50,000 to 500,000 as determined by the intrinsic viscosity method. Examples of olefin copolymers are copolymers of ethylene and an alpha olefin having 3 to 30 carbon atoms per molecule. Examples of such $C_3$ to $C_{30}$ alpha olefins are propylene, 1-butene, 1-pentene, 1-octene, 1-dodecene, 1-octadecene or 1-docosene.

The polyolefin is grafted with an ethylenically unsaturated carboxylic acid or a derivative thereof.

Examples of the unsaturated carboxylic acids are those having 2 to 20 carbon atoms per molecule such as acrylic acid, methacrylic acid, maleic acid, fumaric acid and itaconic acid. The derivatives thereof include, for example, the anhydrides, ester derivatives, amide derivatives, imide derivatives, and metal salts (such as alkali metal salts) of unsaturated carboxylic acids.

Unsaturated dicarboxylic acids having 4 to 10 carbon atoms and the derivatives thereof, particularly the anhydrides thereof, are the especially preferred grafting monomers.

These grafting monomers include for example, maleic acid, fumeric acid, itaconic acid, citraconic acid, cyclohex-4-ene-1,2-dicarboxylic acid, bicyclo[2.2.1] hept-5-ene-2,3-dicarboxylic acid, maleic anhydride, itaconic anhydride, citraconic anhydride, allylsuccinic anhydride, 4-methylcyclohex-4-ene-1,2-dicarboxylic anhydride and bicyclo[2.2.1]hept-5-ene-2,3-dicarboxylic anhydride.

Examples of other grafting monomers include $C_1$-$C_8$ alkyl esters or glycidyl ester derivatives of unsaturated carboxylic acids such as methyl acrylate, methyl methacrylate, ethyl acrylate, ethyl methacrylate, butyl acrylate, butyl methacrylate, glycidyl acrylate, glycidyl methacrylate, monoethyl maleate, diethyl maleate, monomethyl fumarate, dimethyl fumarate, monomethyl itaconate and diethyl itaconate; amide derivatives of unsaturated carboxylic acids such as acrylamide, methacrylamide, maleic monoamide, maleic diamide, maleic N,N-diethylamide, maleic N-monobutylamide, fumaric monoamide, fumaric diamide, fumaric N,N-diethylamide, imide derivatives of unsaturated carboxylic acids, such as maleimide, N-butylmaleimide and N-phenylmaleimide and metal salts of unsaturated carboxylic acids, such as sodium acrylate, sodium methacrylate, potassium acrylate and potassium methacrylate.

Various known methods can be used to graft the grafting monomer to the polyolefin. For example, this can be achieved by heating the polyolefin and the grafting monomer at high temperatures of say about 150° to about 300°C in the presence of absence of a solvent with or without a radical initiator. Another vinyl monomer may be present during the grafting reaction. Suitable solvents that may be used in this reaction are benzene, toluene, xylene, chlorobenzene, cumene, etc. Suitable radical initiators that may be used include t-butyl hydroperoxide, diisopropylbenzene hydroperoxide, di-t-butyl peroxide, t-butyl cumyl peroxide, acetyl peroxide, benzoyl peroxide, isobutyryl peroxide and methyl ethyl ketone peroxide.

In the graft-modified polyolefin resin thus obtained, the amount of the carboxylic acid or derivative is preferably 0.01 to 10%, more preferably 0.1 to 5%, based on the weight of the graft polymer. The amount of the monomer grafted is determined by measuring the oxygen content of the graft polymer by oxygen analysis and the absorption intensities of the graft polymer near 1710, 1790 and 1860 cm$^{-1}$ by infrared absorption spectroscopic analysis.

If desired more than one adhesion layer may be used.

The other component of the laminated layer is a low friction layer which ought to have good scratch resistance and high melting temperature to support the covulcanisation with the rubber. This layer comprises a polyamide. Polyamides are high molecular weight polymers containing amide, $(CONH_2)$ groups and are usually made by the condensation of a carboxylic acid and a polyfunctional amine. Thus amber-coloured products known as Versamides may be made by the condensation of a dimer of an unsaturated carboxylic acid such as linoleic acid with a polyfunctional amine · such as ethylene diamine. Alternatively the polyamide may be a urea-formaldehyde resin obtained by the condensation of formaldehyde and urea.

The preferred polyamide is however nylon which is obtained by the condensation polymerisation of the salt resulting from the reaction of adipic acid with hexamethylene diamine. The polymers obtained usually have molecular weights greater than 10,000 and melt at about 263°C. The unfilled products have a specific gravity of 1.14, a tensile strength of about 13000 psi (89635 kPa) and a compressive strength of about 11000 psi (75845 kPa).

To provide a lower friction coefficient, the copolyamide can be upgraded by blending a polyvinylidene fluoride (PVDF) in a content of between 5 to 50% by weight. The preferred range is 20% to 40% by weight and PVDF is usually has a melting point of 156 to 168°C and a density of 1.75 to 1.78.

The layer of film, comprising the adhesion layer and low friction layer is preferably co-extruded and then laminated to the substrate. Therefore, in accordance with this invention a process for preparing a multilayer composition comprises co-extruding an adhesive layer and adjacent to the adhesive layer a low friction layer and laminating said layers onto an uncured or semi-cured rubber substrate so that the adhesive layer is adjacent to the rubber substrate, said adhesive layer comprising a polyolefin to which has been grafted an ethylenically unsaturated carboxylic acid or a derivative thereof and said low friction layer comprising a polyamide.

It is preferred that the laminated co-extruded layer is applied to the rubber substrate just after the rubber substrate itself has been extruded or after the rubber substrate has been precured in a hot air tunnel. In this manner one can use the heat of the extruded rubber substrate and a low applied pressure to develop immediately a tackiness between the substrate and the adhesion layer.

Thus in the preferred embodiment the adhesive layer and the friction layer are co-extruded onto the moving substrate. This co-extrusion can be achieved by the use of a co-extrusion machine having two extruders, one extruder for the adhesion layer and the other extruder for the low friction layer. (It is preferred to employ a combining feedblock system with for example a 200 mm film die rather than a dual manifold die). Both extruders are usually set at about the same temperature, typically 200 to 240°C and the coating thickness can be controlled by the extruder screw and the web transport rate. The take off speed can be for example from 2 to 30 m/min, more preferably from 4 to 15 m/min.

As an alternative to co-extrusion, the polyamide layer eg film, can be coated with adhesive separately and the polyamide/adhesive laminate then applied to the rubber substrate. Thus for example a polyamide/ adhesive film is prepared separately, rubber is extruded normally at a temperature of about 90°C and the film is laminated with a specific device applying a pressure on the rubber profile either at the uncured stage after extrusion and before entering the curing unit, or at a semi-cured stage after the UHF (ultra high frequency) tunnel or one or several hot air tunnels but before the final hot air tunnel so that a covulcanisation can be achieved after lamination. The curing unit employed may be, for example a UHF heater combined with hot air tunnels, hot air tunnels alone; LCM (liquid curing media) such as nitrate salt baths; or fluidized beds of glass balls suspended in hot air.

Also, non-continuous vulcanization can be used after lamination, for example via steam curing in an autoclave, or press curing by compression moulding at eg about 150°C.

Although the invention is not limited as to the thicknesses of the laminated layers in practice it is preferred that they are films and the total thickness (adhesion film and low friction film) should preferably be between 20 and 100 μm more preferably be below 75 μm and especially from 35-60 μm, for example 40 to 55 μm. The use of films rather than layers thicker than films is especially advantageous so as to retain the elastic properties of the rubber substrate.

In the preferred embodiment of the invention when the rubber substrate is in the uncured state after it has been contacted with the laminated layer, the combination of substrate and laminated layer is thereafter co-vulcanised. Thus, when the rubber is EPDM it should be in admixture with its curing agents (sulphur, metallic thiocarbamates, eg zinc dimethyl dithio carbamate or a sulphur donor such as cyclobenzosulphenamide) and preferably also a metallic oxide, eg zinc oxide to provide additionally at the surface an ionomeric binding between the acidic group and the rubber, under pressure and at elevated temperature after a period of time.

Also usual reinforcing fillers are included, for example carbon black and/or calcium carbonate, oil (naphthenic or paraffinic) and additives such as stearic acid and polyethylene glycol. The reinforcing fillers give extrudability and physical strength characteristics which are required commercially.

The EPDM substrate with curing agents and when present, other additives, and the laminated layer are then vulcanised, preferably in a continuous vulcanisation (CV) line. The vulcanisation should preferably be attained by application of hot air so that the film on the surface of the substrate is at a temperature below about 220°C. Preferably the curative in the EPDM is not a peroxide because the application of heat would result in the depolymerisation of the surface regions of the polymer.

As the result of the use of this invention the sliding of a glass window against the multilayer composition is considerably improved compared with sliding against the rubber substrate alone. Compared with use of the rubber substrate alone, there is better water tightness due to larger surface contact with the glass. Also due to the excellent adhesion of the laminated layer to the rubber substrate, problems related to the abrasion and peeling of the flock material by the glass window after a certain service life are avoided. Also the outer layer of the laminated layer has good scratch resistance. Consequently rubber extrudates to which the laminated layer has been applied, eg by co-extrusion, have particular use in the automobile industry as automobile sealing profiles which have good grip and water ozone, U.V, and water resistance at the rubber side and with good scratch resistance and low friction properties due to the outer polyamide file or layer.

Example

An EPDM formulation was prepared having the following composition in which the quantities given are parts by weight:

Table

| | |
|---|---|
| Vistalon 6630 [(1)] w/30 phr oil | 65 |
| Vistalon 8510 [(2)] w/15 phr oil | 55 |
| Carbon black FEF N 550 | 110 |
| Carbon black SRF N 762 | 50 |
| Whiting (calcium carbonate) | 30 |
| Flexon 876 (paraffinic oil) | 65 |
| | (total oil : 85 phr) |
| Zinc Oxide | 5 |
| Stearic Acid | 1.5 |
| Carbowax 3350 (Polyethylene Glycol) | 5 |
| Rhenosorb C (Calcium Oxide) | 5 |
| Sulphur | 1.5 |
| CBS (cyclohexyl benzo thiazole sulphenamide) | 2 |
| ZDEDC (zinc diethyldithiocarbamate) | 0.8 |

(1) EPDM of 60 weight % ethylene, 40 weight % propylene with 9 weight % diene based on weight of ethylene and propylene, oil extended 30 phr.
(2) EPDM of 50 weight % ethylene, 50 weight % propylene with 9 weight % diene based on weight of ethylene and propylene, oil extended 15 phr.

The properties of the formulation were as follows:

| | |
|---|---|
| Mooney viscosity ML 1+4 100°C | 61 |
| Rheometer 180°C 5° Arc | |
| ML | 9 |
| MH | 70 |
| $T_2$ scorch min | 1.1 |
| $T_{90}$ cure min | 3.4 |

Physical properties

| | |
|---|---|
| Press cured 4 minutes at 180°C | |
| Hardness shore A (instant) | 77 |
| 100% modulus (MPa) | 4.1 |
| Tensile strength (MPa) | 9.6 |
| Elongation at break (%) | 360 |

Two co-extruded films (polyamide and adhesive) were then laminated onto the EPDM after it had been extruded.

The adhesive film was a two component blend of 85 wt % (a) and 15 wt % (b), where (a) was a copolymer of 95 wt % propylene and 5 wt % ethylene, which copolymer had been grafted with 0.1 wt % maleic anhydride (MA), and (b) was an EPM copolymer rubber containing 75 wt % ethylene and 25 wt % propylene. The total blend contained 85 wt % propylene and 15 wt % ethylene. The overall density of the blend was 0.895 and the melt indexes were

| | | |
|---|---|---|
| melt index (2.16 kg at 190°C) | : | 2.23 dg/min |
| melt index (21.6 kg at 190°C) | : | 242 dg/min |
| melt index ratio | | 108 |

The differential scanning calorimeter (DSC) melting point was 142°C.

The low friction film was a mixture of polyamides PA6 and PA12 (nylon) such that the DSC melting point was about 210°C and the density about 1.10.

The EPDM was extruded through a die and just after it had been extruded the two co-extruded films of adhesive MA grafted propylene-ethylene copolymer +EPM and polyamide were laminated onto the emerging EPDM extrudate. The films were prepared on a cast film extrusion line using two extruders and a two layer (A-B) combining blockfeed with a 200 mm film die. The extrusion temperature was 220°C and the take-off speed 4m/min. The thickness of each film was about 20 μm, ie the total thickness was about 40 μm.

The emerging extrudate (rubber plus MA grafted propylene-ethylene copolymer +EPM plus polyamide) was cured in a continuous vulcanisation line (UHF + hot air) with the film on the surface at a temperature below 220°C.

The cured extrudate which resulted had a thin low friction film (polyamide) coated onto a rubber profile, providing excellent sliding properties and adhesion to the rubber profile.

The following table shows the coefficient of friction compared with the EPDM alone and the conventional flocked rubber.

### SURFACE PROPERTIES

#### Coefficient of Friction

| SAMPLE | EPDM RUBBER ALONE | FLOCKED RUBBER | COATED RUBBER OF INVENTION |
|---|---|---|---|
| Static | 2.04 | 0.22 | 0.25 |
| Kinematic | 1.25 | 0.25 | 0.21 |

Sledge weight 208.6g

Dimensions 6x6

Speed of testing 10 cm/min

It can be seen that the coated rubber of the invention has superior sliding properties to that of EPDM alone and comparable properties to flocked rubber but without the previously mentioned disadvantages of flocked rubber.

The good adhesion of the laminated layer (MA grafted propylene-ethylene copolymer plus polyamide) to the EPDM profile is illustrated by the results of the Peel adhesion test given below:

### ADHESION

#### PEELING TEST

| | |
|---|---|
| Bond strength | 10 N/inch |
| Failure mode | delamination of the film |

1) compound description - see Table 1
2) test conditions :- press cure of rubber + film 25 minutes at 140°C
- peeling test with Zwick machine - speed 2.5 cm/min peeling angle 180°C - test at room temperature.

## Claims

1. A multilayer composition comprising an uncured or semi-cured rubber substrate to which is adhered a laminated layer comprising an adhesion layer adjacent to the substrate and a low friction layer remote from the substrate, the adhesion layer comprising a polyolefin to which has been grafted an ethylenically unsaturated carboxylic acid or a derivative thereof and the low friction layer comprising a polyamide.

2. A composition according to claim 1 wherein the rubber is EPDM.

3. A composition according to either of claims 1 and 2 wherein the grafted polyolefin is a grafted polypropylene.

4. A composition according to any one of the preceding claims wherein the polyolefin has been grafted with maleic anhydride.

5. A composition according to any one of the preceding claims wherein the polyamide is nylon.

6. A composition according to any one of the preceding claims wherein the layers which are laminated are films of a combined thickness of below 75 microns, preferably from 35 to 60 microns.

7. A composition according to any one of the preceding claims wherein the rubber substrate has been (further) cured to an elastomer.

8. A process for preparing a multilayer composition according to any one of the preceding claims which comprises co-extruding said adhesion layer and adjacent to the adhesion layer said low friction layer and laminating said layers onto said uncured or semi-cured rubber substrate.

9. A process according to claim 8 wherein the adhesion and low friction layers are laminated onto the rubber substrate just after the rubber substrate has been extruded or has been precured in a hot air tunnel.

10. A process for preparing a multilayer composition according to any one of claims 1 to 6 which comprises forming a laminate of the adhesion layer and the low friction layer, and applying the laminate to an extrudate of said uncured or semi-cured rubber as it leaves the extruder, the adhesion layer being adjacent to the rubber extrudate.

11. A process according to any one of claims 8, 9 and 10 wherein the uncured or semi-cured rubber is subsequently (further) cured to give it elastomeric properties.

European Patent Office

EUROPEAN SEARCH REPORT

Application Number

EP 89 30 4516

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 124 634 (RHEINSTAHL EGGERS-KEHRHAHN) <br> * Page 3, lines 33-37; page 5, lines 17-22; page 6, lines 8-23; figure 1 * <br> --- | 1 | B 32 B 25/08 <br> B 32 B 27/34 |
| A | US-A-3 563 871 (S. NEWMAN et al.) <br> * Column 1, lines 28-41 * <br> --- | 1 | |
| A | EP-A-0 200 618 (HUTCHINSON) <br> * Column 1, lines 1-21; column 2, lines 32-44 * <br> ----- | 1 | |

TECHNICAL FIELDS SEARCHED (Int. Cl.4)

B 32 B
B 60 R 13/06

The present search report has been drawn up for all claims

| Place of search | Date of completion of the search | Examiner |
|---|---|---|
| THE HAGUE | 04-08-1989 | IBARROLA TORRES O.M. |